# EUROPÄISCHE PATENTSCHRIFT

(11) **EP 1 136 984 B1**
(45) Veröffentlichungstag und Bekanntmachung des Hinweises auf die Patenterteilung: **30.08.2006**
(21) Anmeldenummer: 01103902.1
(22) Anmeldetag: 17.02.2001
(51) Int. Cl.: G10L 15/26, G10L 15/22

(54) **Verfahren zur Sprachsteuerung eines elektrischen Geräts**
Method for voice command of an electric device
Méthode de commande vocale d'un appareil électrique

(30) Priorität: 21.03.2000 DE 10013879
(43) Veröffentlichungstag der Anmeldung: 26.09.2001
(73) Patentinhaber: ROBERT BOSCH GMBH, 70442 Stuttgart (DE)
(72) Erfinder: Wannke, Dietmar A, 72768 Reutlingen (DE)

(56) Entgegenhaltungen:
- EP-A- 0 994 461
- WO-A-89/04035
- US-A- 5 671 426
- "SPEECH RECOGNITION USING RETURNED CHARACTER BASING" IBM TECHNICAL DISCLOSURE BULLETIN, IBM CORP. NEW YORK, US, Bd. 38, Nr. 4, 1. April 1995 (1995-04-01), Seite 135 XP000516097 ISSN: 0018-8689

## Beschreibung

### Stand der Technik

Die Erfindung geht von einem Verfahren zur Sprachsteuerung eines elektrischen Geräts, wobei einzugebende Informationen durch Buchstabieren eingegeben werden, nach der Gattung des unabhängigen Patentanspruchs aus.

Es sind elektrisches Geräte in Form von Fahrzeugnavigationsgeräten bekannt, bei denen einzugebende Informationen, wie beispielsweise der Ortsname eines Navigationsziels, durch Buchstabieren eingegeben werden. Eine Korrektur innerhalb einer laufenden Spracheingabe ist dabei nicht vorgesehen. Soll eine Korrektur der eingegebenen Information vorgenommen werden, ist diese nach Abschluss der Eingabeprozedur durch Wiederholung der Spracheingabe für die gewünschte Information vorzunehmen. Dieses Verfahren erscheint etwas umständlich und kann den Fahrer eines Kraftfahrzeugs vom Verkehrsgeschehen erheblich ablenken.

"Speech Recognition Using Returned Character Basing" IBM Technical Disclosure Bulletin, IBM Corporation New York, US, Band 38, No. 4, 01.04.1995, Seite 135 XP000516097, ISSN: 0018-8689 offenbart ein Verfahren zur Spracheingabe, bei dem nach Spracheingabe eines jeden einzelnen Buchstabens der erkannte Buchstabe ausgegeben wird. Damit wird eine sofortige Korrektur eines falsch eingegebenen oder erkannten Buchstabens ermöglicht.

US 5 671 426 offenbart ein Spracheingabesystem, bei dem bei Übereinstimmung eingegebener Buchstabenfolgen mit einer Wortliste abgelegten Einträgen die passenden Einträge ausgewählt werden.

### Vorteile der Erfindung

Das erfindungsgemäße Verfahren zur Sprachsteuerung eines elektrischen Geräts, bei dem einzugebende Informationen durch Buchstabieren eingegeben werden, und bei dem ein erkannter Buchstabe oder eine erkannte Buchstabenfolge zur Quittierung der Buchstabeneingabe ausgegeben wird, hat demgegenüber den Vorteil, dass dem Benutzer sofort nach der Eingabe eines Buchstabens eine Information über den vom Gerät tatsächlich verstandenen Buchstaben oder die tatsächlich verstandene Buchstabenfolge vermittelt wird. Dies ermöglicht wiederum eine sofortige Korrektur der Eingabe im Falle einer falsch verstandenen Spracheingabe. Eine umständliche vollständige Wiederholung der Spracheingabe erübrigt sich damit.

Durch die Ausgabe des Zeichens vor der nächsten Eingabe besteht vorteilhaft ein interaktives Arbeiten mit dem elektrischen Gerät, so dass Eingabe- und Erkennungsfehler frühzeitig auffallen und sich dadurch die Eingabe vereinfacht.

Günstig ist auch die akustische und/oder optische Ausgabe, weil dadurch eine einfache Kontrolle der Eingabe möglich ist.

Weiterhin ist vorteilhaft, wenn zur Korrektur eines nicht korrekt erkannten Buchstabens oder einer nicht korrekt erkannten Buchstabenfolge der zuletzt eingegebene Buchstabe oder die zuletzt eingegebene Buchstabenfolge erneut eingebbar ist. Hierzu ist vorteilhafterweise ein Korrekturbefehl in Form einer Spracheingabe einzugeben, der eine Löschung des zuletzt eingegebenen Buchstaben oder der zuletzt eingegebenen Buchstabenfolge bewirkt.

Zur Beschleunigung der Spracheingabeprozedur ist es weiterhin erfindungsgemäß vorgesehen, dass bei Feststellung einer Übereinstimmung einer Folge einzelner eingegebener Buchstaben mit einer gespeicherten Information oder dem Beginn einer gespeicherten Information die gespeicherte Information als Eingabevorschlag ausgegeben wird. Besonders vorteilhaft ist die Möglichkeit der Übernahme eines ausgegebenen Eingabevorschlags durch Spracheingabe eines Bestätigungsbefehls als gewünschte Eingabe.

Weiter ist es erfindungsgemäß vorgesehen, dass ein Eingabevorschlag durch Spracheingabe eines weiteren Buchstaben oder einer weiteren Buchstabenfolge verworfen wird. Nach Spracheingabe eines weiteren Buchstaben wird dann vorteilhafterweise der zuvor verworfene Eingabevorschlag nicht mehr als Eingabevorschlag berücksichtigt, selbst wenn die dann eingegebenen Buchstaben im verworfenen Eingabevorschlag enthalten sind. Es wird damit die Möglichkeit zur Generierung weiterer, abweichender Eingabevorschläge ermöglicht, die eine weitere Beschleunigung der Eingabeprozedur ermöglichen.

Als besonders günstig wird die Spracheingabe für ein Navigationssystem angesehen, weil diese Art der Eingabe einfach und leicht erlernbar ist und den Fahrer wenig vom Verkehrsgeschehen ablenkt.

Insbesondere wird die Ziel- und Routeneingabe sehr vereinfacht und dabei sicher und schnell durchgeführt.

Ein besonders einfaches Unterscheidungsmerkmal für das elektrische Gerät ist die Eingabe von einzelnen Buchstaben für Ziele von einer Zeichenfolge für Befehle. Dadurch kann das elektrische Gerät sofort auf den richtige Speicher zugreifen und schnell die gesuchte Antwort finden.

### Zeichnungen

Ausführungsbeispiele der Erfindung sind in den Zeichnungen dargestellt und werden nachfolgend näher erläutert.

Es zeigen
Figur 1 ein Blockschaltbild des erfindungswesentlichen Teils eines elektrischen Geräts zur Durchführung des erfindungsgemäßen Verfahrens
Figur 2 ein Ablaufdiagramm eines bevorzugten Ausführungsbeispiels des erfindungsgemäßen Spracheingabeverfahrens.

### Beschreibung der Ausführungsbeispiele

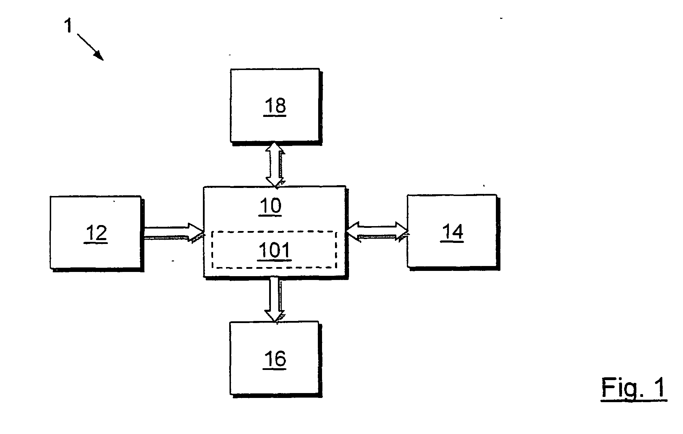

Figur 1 zeigt ein Blockschaltbild eines elektrischen Geräts 1 zur Durchführung des erfindungsgemäßen Verfahrens.

Das per Spracheingabe zu steuernde elektrische Gerät 1 verfügt über ein Mikrofon 12 zur Aufnahme von gesprochenen Informationen. Die Ausgangssignale des Mikrofons 12 sind einer Steuerung 10 zugeführt. Die Steuerung 10 ist vorzugsweise in Form eines programmgesteuerten Mikroprozessors ausgeführt, wobei die von der Steuerung zu bewältigenden Aufgaben zur Realisierung der Betriebsabläufe und Funktionen des Geräts als Teile des durch den Mikroprozessor abzuarbeitenden Betriebsprogramms realisiert sind.

An die Steuerung 10 ist ein Speicher 14 angeschlossen, in dem ein Sprachschatz und den Elementen des Sprachschatzes zugeordnet Sprachmuster abgespeichert sind. Der Sprachschatz umfaßt im vorliegenden Fall die 26 Buchstaben des deutschen Alphabets zuzüglich der drei Umlaute "Ä", "Ö" und "Ü", weiter die Ziffern "0" bis "9" und die Befehlsworte "ZURÜCK" und "EINGABE". Jedem dieser Elemente des Sprachschatzes, nämlich den Buchstaben, Umlauten, Ziffern und Befehlsworten, ist im Speicher 14 mindestens ein Sprachmuster zugeordnet. Im Falle mehrerer gebräuchlicher Aussprachen eines der Elemente des Sprachschatzes, wie beispielsweise der Ziffer zwei mit den gebräuchlichen Aussprachen "ZWEI" und "ZWO" sind den betreffenden Elementen des Sprachschatzes im Speicher 14 vorzugsweise alle gebräuchlichen Sprachmuster zugeordnet.

Zum Vergleich eines über das Mikrofon 12 aufgenommenen Sprachsignals mit den im Speicher 14 abgelegten Sprachmustern verfügt die Steuerung 10 über eine Vergleichseinheit 101, die vorzugsweise als Teil des Betriebsprogramms des Geräts in Form von Software realisiert ist. Die Vergleichseinheit 101 ermittelt aus der Menge der im Speicher 14 abgelegten Sprachmuster dasjenige Sprachmuster, das mit dem aufgenommenen Signal die größte Übereinstimmung aufweist. Liegt das Maß der festgestellten Übereinstimmung über einem Mindestwert, gilt der oder die dem ermittelten Sprachmuster zugeordnete Buchstabe, Umlaut, Ziffer oder Befehl als korrekt erkannt. Unterschreitet das Maß der festgestellten Übereinstimmung zwischen aufgenommenem Sprachsignal und ähnlichstem Sprachmuster hingegen ein Mindestmaß, wird davon ausgegangen, daß das aufgenommene Sprachsignal keinem der gespeicherten Sprachmuster entspricht und damit keine gültige Eingabe darstellt.

An die Steuerung 10 ist schließlich eine Ausgabeeinheit 16 zur Anzeige und/oder akustischen Ausgabe eines oder einer erkannten, mittels des Mikrofons 12 aufgenommenen Buchstabens, Umlauts, Ziffer oder Befehls angeschlossen. Wird von der Vergleichseinheit 101 die Übereinstimmung einer Spracheingabe mit einem gespeicherten Sprachmuster festgestellt, so wird der oder die zugehörige Buchstabe, Umlaut, Ziffer oder Befehl zur Quittierung der Spracheingabe über die Ausgabeeinheit ausgegeben, also angezeigt und/oder akustisch ausgegeben.

Gemäß einer vorteilhaften Ausführungsform der Erfindung ist statt einer Spracheingabe bis auf die genannten Befehle nur einzelner Buchstaben zusätzlich auch eine Spracheingabe von Buchstabenfolgen von beispielsweise zwei Buchstaben vorgesehen. Dazu ist die Steuerung 10 derart ausgelegt, daß nach einer Spracheingabe eines oder einer ersten Buchstabens, Umlauts oder Ziffer eine Quittierung der erkannten Spracheingabe erst dann erfolgt, wenn nach der Spracheingabe eine vorgegebene Zeitdauer überschritten worden ist. Erfolgt hingegen innerhalb der vorgegebenen Zeitdauer eine weitere Spracheingabe, so wird diese logisch der unmittelbar vorhergehenden Spracheingabe zugeordnet. Die unmittelbar aufeinanderfolgenden Spracheingaben werden in beschriebener Weise durch Vergleich der einzelnen Eingaben mit gespeicherten Mustern verifiziert und im Falle genügend großer Übereinstimmungen der Eingaben mit den nächstkommenden gespeicherten Mustern als korrekt eingegebene Buchstaben- oder Zeichenfolge dann akzeptiert, wenn im Speicher 14 eine solche Buchstaben- oder Zeichenfolge abgelegt ist. Die eingegebene Zeichenfolge, oder vorzugsweise ein durch die eingegebene Zeichenfolge repräsentierter Steuerbefehl, wird dann komplett als Quittung über die Ausgabeeinheit 16 ausgegeben. Erfolgt beispielsweise nach Spracheingabe des Buchstaben "A" innerhalb der vorgegebenen Zeitdauer die weitere Spracheingabe des Buchstaben "R", werden beide Buchstaben aufgrund genügender Übereinstimmung mit den entsprechenden Sprachmustern im Speicher 14 korrekt erkannt. Ist im Speicher 14 die Buchstabenfolge aus den Buchstaben "A" und "R" als Abkürzung für einen Steuerbefehl vorgesehen, so erfolgt über die Ausgabeeinheit 16 die Ausgabe des der Buchstabenfolge "AR" zugeordneten Steuerbefehls, im vorliegenden Fall beispielsweise "AUTORADIO". Durch die Buchstabenfolge "AR" wird also die Steuerung des Autoradios aktiviert.

Die Menge der im Speicher 14 bevorrateten Zeichen, nämlich Buchstaben, Umlaute und Ziffern, sowie Befehle und Buchstabenfolgen wird vorzugsweise kontextsensitiv für Vergleichsoperationen zugelassen oder gesperrt. So werden solche Buchstaben- oder Zeichenfolgen, die im Zusammenhang mit einer aktuellen Steuerfunktion keinen gültigen Steuerbefehl repräsentieren, von Vergleichsoperationen ausgeschlossen. Wird beispielsweise durch die Buchstabenfolge "NA" ein Fahrzeugnavigationsgerät aufgerufen und anschließend durch Spracheingabe der Buchstabenfolge "ZI" die Eingabe eines Zielorts für das Fahrzeugnavigationsgerät gestartet, wird beispielsweise die Buchstabenfolge "NA" während der Zieleingabe als keinen gültigen Steuerbefehl ergebende Buchstabenfolge von den Vergleichsoperationen ausgeschlossen. In ähnlicher Weise können beispielsweise während der Zielorteingabe solche Buchstaben, die in Verbindung mit zuvor eingegebenen Buchstaben keinen in einer Kartenbasis enthaltenen gültigen Zielort ergeben, von den Vergleichsoperationen und damit von der Spracheingabe ausgeschlossen werden. Die Kartenbasis kann vorzugsweise in Form eines an die Steuerung 10 angeschlossenen Massenspeichers 18, beispielsweise als in ein CD-ROM-Lesegerät eingelegte CD-ROM, realisiert sein.

Als Ziel- und Routeneingaben können alle gewünschten Orte, Straßen, Bauwerke usw. einer gespeicherten Straßenkarte (z. B. CD-ROM) durch die sprachliche Eingabe einzelner Buchstaben, Zeichen und Nummern eingegeben werden. Steuerbefehle werden dagegen grundsätzlich in einer Zeichenfolge mit wenigstens zwei Zeichen eingegeben, wie es oben schon erläutert wurde. Es ist auch vorgesehen, für Steuerbefehle ganze Silben oder Worte zu verwenden, beispielsweise "EINGABE".

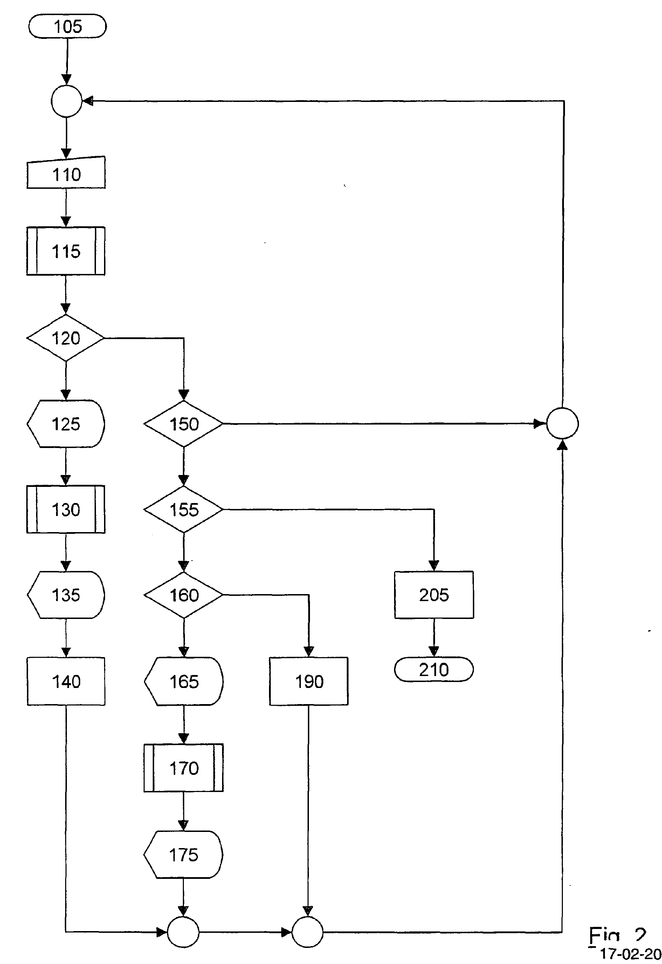

Das erfindungsgemäße Eingabeverfahren wird nachfolgend anhand des in Figur 2 dargestellten Ablaufplans näher erläutert.

Der erfindungsgemäße Ablauf beginnt mit Schritt 105 mit Einschalten des sprachgesteuerten Gerätes 1.

In Schritt 110 erfolgt eine Spracheingabe durch Aufnahme eines oder einer durch den Benutzer gesprochenen Zeichens, nämlich Buchstabens, Umlauts oder Ziffer, Zeichenfolge oder Befehls.

In Schritt 115 wird die Spracheingabe mit im Speicher 14 abgelegten Sprachmustern verglichen und bei hoher Übereinstimmung der Spracheingabe mit einem abgelegten Sprachmuster dieses und ein im Speicher 14 zugeordnetes Zeichen, eine zugehörige Zeichenfolge oder ein zugehöriger Befehl ausgewählt.

Wird in Schritt 120 festgestellt, daß es sich bei der Spracheingabe um ein im Speicher 14 enthaltenes Zeichen handelt, wird dieses in Schritt 125 zur Quittierung der Spracheingabe angezeigt und/oder akustisch ausgegeben.

In Schritt 130 wird im Massenspeicher 18 nach einer Übereinstimmung eines eingegebenen Buchstaben oder Zeichens oder einer eingegebenen Buchstaben- oder Zeichenfolge mit einem Eintrag, beispielsweise einem mit dem eingegebenen Buchstaben oder der eingegebenen Buchstabenfolge beginnenden Ortsnamen, gesucht. Wird ein solcher Eintrag ermittelt, wird dieser in Schritt 135 als Eingabevorschlag durch die Ausgabeeinheit 16 dargestellt und/oder akustisch ausgegeben. In Schritt 140 wird im Falle einer Anzeige des Eingabevorschlages ein Eingabecursor, der die nächste einzugebende Stelle markiert, auf die auf den eingegebenen Buchstaben folgende Stelle verschoben.

Erfolgt im darauffolgenden Eingabeschritt 110 die Spracheingabe eines Bestätigungsbefehls, wie des Wortes "EINGABE", und wird diese aufgrund der in Schritt 115 durchgeführten Vergleichsoperationen einem entsprechenden Eintrag im Speicher 14 zugeordnet, wird in Schritt 120 festgestellt, daß es sich bei der letzten Spracheingabe nicht um einen Buchstaben handelte und nachfolgend in Schritt 150 festgestellt, daß eine Spracheingabe einer Buchstabenfolge vorliegt. In Schritt 155 wird diese Buchstabenfolge als Bestätigungsbefehl "EINGABE" erkannt, worauf in Schritt 205 der angebotene Eingabevorschlag als Eingabe übernommen wird. Der Ablauf endet in Schritt 210 nach Abschluß der Spracheingabe.

Erfolgt in Schritt 110 anstelle der Spracheingabe des Bestätigungsbefehls die Eingabe eines Korrekturbefehls, nämlich beispielsweise der Anweisung "ZURÜCK", und wird diese in Schritt 115 im Speicher 14 einem Korrekturbefehl zugeordnet, so wird in Schritt 120 festgestellt, daß es sich bei der aktuellen Eingabe nicht um eine Buchstaben- oder Zeicheneingabe handelt. In Schritt 150 wird dann festgestellt, daß die aktuelle Eingabe eine Buchstabenfolge ist. In Schritt 155 wird festgestellt, daß die Buchstabenfolge kein Bestätigungsbefehl ist und in Schritt 160 wird festgestellt, daß die Buchstabenfolge ein Korrekturbefehl ist. Infolge der Eingabe eines Korrekturbefehls wird in Schritt 190 die zuletzt vorgenommene Eingabe, beispielsweise der zuletzt eingegebene Buchstabe gelöscht, bei Anzeige der Eingaben der Eingabecursor auf dem zuletzt eingegebenen Buchstaben oder Zeichen plaziert und die Eingabeprozedur mit einer erneuten Spracheingabe in Schritt 110 fortgesetzt.

Erfolgt in Schritt 110 eine Spracheingabe, die aufgrund undeutlicher Aussprache, externer Störgeräusche oder der Tatsache, daß diese Eingabe kontextsensitiv ausgeschlossen ist, keine oder eine unzureichende Übereinstimmung mit im Speicher 14 abgelegten Sprachmustern, dann wird in Schritt 120 festgestellt, daß es sich bei der aktuellen Eingabe um keine gültige Zeichen- oder Buchstabenfolge handelt. In Schritt 150 wird festgestellt, daß es sich bei der aktuellen Eingabe auch um keine gültige Buchstaben- oder Zeichenfolge handelt. Die Eingabe wird daher ignoriert und der Ablauf mit einer weiteren Eingabe in Schritt 110 fortgesetzt.

Erfolgt beispielsweise nun in Schritt 110 eine Spracheingabe einer Zeichen- oder Buchstabenfolge, deren einzelne Zeichen oder Buchstaben in Schritt 115 Sprachmustern eindeutig zuordenbar sind, und die zusammen einer im Speicher 14 abgelegten Abkürzung eines Steuerbefehls entsprechen, so wird in Schritt 120 festgestellt, daß es sich bei der aktuellen Eingabe nicht um einen einzelnen Buchstaben oder ein einzelnes Zeichen handelt. In Schritt 150 wird festgestellt, daß eine gültige Buchstaben- oder Zeichenfolge vorliegt. In den Schritten 155 und 160 wird festgestellt, daß die aktuelle Eingabe weder einem Bestätigungs- noch einem Korrekturbefehl entspricht. Daher wird in Schritt 165 die verstandene Buchstabenfolge als Quittung angezeigt und/oder akustisch ausgegeben. In Schritt 170 wird der der Buchstaben- oder Zeichenfolge entsprechende Steuerbefehl ausgelesen und in Schritt 175 als Eingabeangebot ausgegeben, das durch Erzeugung eines Bestätigungsbefehls im darauffolgenden Eingabeschritt 110 angenommen oder durch Eingabe eines Korrekturbefehls in Schritt 110 abgelehnt werden kann.

Ist in einem zurückliegenden Eingabeschritt 110 ein Buchstabe oder Zeichen eingegeben und darauf ein Eintrag aus dem Massenspeicher als Eingabevorschlag ausgegeben worden, so wird dieser durch eine erneute Buchstaben- oder Zeicheneingabe verworfen und im Massenspeicher als für folgende Vergleichsoperationen nicht mehr zu berücksichtigen markiert. Infolge der erneuten Buchstabeneingabe wird dann ein neuer Eingabevorschlag ausgegeben.

Der erfindungsgemäße Ablauf wird nachfolgend am Beispiel einer Zielorteingabe in ein Fahrzeugnavigationsgerät skizziert.
Schritt 105: Start der Spracheingabe
Schritt 110: Spracheingabe Buchstabe "S"
Schritt 115: Vergleich der Eingabe mit Speicherinhalten
Schritt 120: Buchstabe "S" wurde erkannt
Schritt 125: Ausgabe Buchstabe "S"
Schritt 130: Ermittlung der Übereinstimmung "SAARBRÜCKEN"
Schritt 135: Ausgabe der Übereinstimmung "SAARBRÜCKEN"
Schritt 140: Eingabecursor wird eine Position weitergerückt
Schritt 110: Spracheingabe Buchstabe "A"
Schritt 115: Vergleich der Eingabe mit Speicherinhalten
Schritt 120: Buchstabe "A" wurde erkannt
Schritt 125: Ausgabe Buchstabe "A"
Schritt 130: Ermittlung der Übereinstimmung "SAARBURG", Übereinstimmung "SAARBRÜCKEN" wird nicht mehr berücksichtigt, da sie aufgrund einer weiterer Buchstabeneingabe verworfen wurde.
Schritt 135: Ausgabe der Übereinstimmung "SAARBURG"
Schritt 140: Eingabecursor wird eine Position weitergerückt
Schritt 110: Spracheingabe Buchstabe "A"
Schritt 115: Vergleich der Eingabe mit Speicherinhalten
Schritt 120: Buchstabe "A" wurde aufgrund undeutlicher
Aussprache oder wegen Störgeräuschen als "H" interpretiert
Schritt 125: Ausgabe Buchstabe "H"
Schritt 130: Ermittlung keiner Übereinstimmung mit Anfangsbuchstaben "SAH"
Schritt 135: Ausgabe keiner Übereinstimmung
Schritt 110: Eingabe "ZURÜCK!"
Schritt 115: Vergleich der Eingabe mit Speicherinhalten
Schritt 120: Eingabe ist kein Buchstabe
Schritt 150: Eingabe ist Buchstabenfolge
Schritt 155: Eingabe ist keine Bestätigung
Schritt 160: Eingabe ist Korrekturbefehl
Schritt 190: Eingabecursor wird auf zuletzt eingegebenen Buchstaben "H" zurückverschoben
Schritt 110: Spracheingabe Buchstabe "A"
Schritt 115: Vergleich der Eingabe mit Speicherinhalten
Schritt 120: Buchstabe "A" wurde aufgrund undeutlicher
Aussprache oder wegen Störgeräuschen nicht verstanden Schritt 150: Verstandene Eingabe ist keine Buchstabenfolge
Schritt 110: Spracheingabe Buchstabe "A"
Schritt 120: Buchstabe "A" wurde erkannt
Schritt 125: Ausgabe Buchstabe "A"
Schritt 130: Ermittlung der Übereinstimmung "SAARHÖLZBACHG"
Schritt 135: Ausgabe der Übereinstimmung "SAARHÖLZBACH"
Schritt 140: Eingabecursor wird eine Position weitergerückt
Schritt 110: Spracheingabe Buchstabe "R"
Schritt 115: Vergleich der Eingabe mit Speicherinhalten
Schritt 120: Buchstabe "R" wurde aufgrund undeutlicher Aussprache oder wegen Störgeräuschen als Buchstabenfolge "AR" interpretiert.
Schritt 150: Verstandene Eingabe ist Buchstabenfolge "AR" Schritt 155: Buchstabenfolge "AR" ist keine Bestätigung Schritt 160: Buchstabenfolge "AR" ist kein Korrekturbefehl Schritt 165: Verstandene Buchstabenfolge "AR" wird ausgegeben
Schritt 170: Ermittlung der Übereinstimmung "AUTORADIO" Schritt 175: Ausgabe der Übereinstimmung "AUTORADIO" Schritt 110: Eingabe "ZURÜCK!"
Schritt 115: Vergleich der Eingabe mit Speicherinhalten Schritt 120: Eingabe ist kein Buchstabe
Schritt 150: Eingabe ist Buchstabenfolge
Schritt 155: Eingabe ist keine Bestätigung
Schritt 160: Eingabe ist Korrekturbefehl
Schritt 190: Übereinstimmung "AUTORADIO" wird verworfen. Eingabecursor wird auf die Stelle hinter dem zuletzt eingegebenen Buchstaben verschoben
Schritt 110: Spracheingabe Buchstabe "R"
Schritt 120: Buchstabe "R" wurde erkannt
Schritt 125: Ausgabe Buchstabe "R"
Schritt 130: Ermittlung der Übereinstimmung "SAARLOUIS" Schritt 135: Ausgabe der Übereinstimmung "SAARLOUIS" Schritt 140: Eingabecursor wird eine Position weitergerückt Schritt 110: Spracheingabe "EINGABE!"
Schritt 115: Vergleich der Eingabe mit Speicherinhalten Schritt 120: Eingabe ist kein Buchstabe
Schritt 150: Eingabe ist Buchstabenfolge
Schritt 155: Eingabe ist Bestätigung
Schritt 205: Angebotene Übereinstimmung wird übernommen Schritt 210: Ende der Spracheingabe.

## Patentansprüche

1. Verfahren zur Sprachsteuerung eines elektrischen Geräts, wobei Informationen durch Buchstabieren in das elektrische Gerät akustisch eingegeben werden, wobei das elektrische Gerät einen erkannten Buchstaben oder ein erkanntes Zeichen oder eine erkannte Buchstaben- oder Zeichenfolge zur Quittierung der Buchstaben- oder Zeicheneingabe ausgibt, **dadurch gekennzeichnet, dass** bei Feststellung einer Übereinstimmung einer Folge einzelner eingegebener Buchstaben oder Zeichen mit einer gespeicherten Information oder dem Beginn einer gespeicherten Information die gespeicherte Information als Eingabevorschlag ausgegeben wird und dass der Eingabevorschlag durch Spracheingabe eines weiteren Buchstabens oder Zeichens oder einer weiteren Buchstaben- oder Zeichenfolge verworfen wird.

2. Verfahren nach Anspruch 1, **dadurch gekennzeichnet, dass** die Ausgabe des erkannten Buchstabens oder Zeichens vor der nächsten Eingabe erfolgt.

3. Verfahren nach Anspruch 1 order 2, **dadurch gekennzeichnet, dass** die Ausgabe des erkannten Buchstabens oder Zeichens akustisch und/oder optisch erfolgt.

4. Verfahren nach einem der vorstehenden Ansprüche, **dadurch gekennzeichnet, dass** zur Korrektur eines nicht korrekt erkannten Buchstabens oder Zeichens oder einer nicht korrekt erkannten Buchstaben- oder Zeichenfolge der zuletzt eingegebene Buchstabe oder das zuletzt eingegebene Zeichen oder die zuletzt eingegebene Buchstaben- oder Zeichenfolge erneut akustisch eingebbar ist.

5. Verfahren nach einem der vorstehenden Ansprüche, **dadurch gekennzeichnet, dass** ein Eingabevorschlag durch Spracheingabe eines Bestätigungsbefehls angenommen wird.

6. Verfahren nach einem der vorstehenden Ansprüche, **dadurch gekennzeichnet, dass** das elektrische Gerät ein Navigationsystem eines Kraftfahrzeugs ist.

7. Verfahren nach Anspruch 6, **dadurch gekennzeichnet, dass** die einzugebenden Informationen Ziel-, Routeneingaben und/oder Steuerbefehle aufweisen.

8. Verfahren nach einem der Ansprüche 6 oder 7, **dadurch gekennzeichnet, dass** Ziel- und Routeneingaben in Einzelbuchstaben und Steuerbefehle als Zeichenfolge mit wenigstens zwei Zeichen eingegeben werden.

9. Verfahren nach Anspruch 8, **dadurch gekennzeichnet, dass** bei der Zeicheneingabe von Steuerbefehlen die eingegebenen Zeichen die Anfangsbuchstaben eines Wortes sind.

## Claims

1. Method for performing voice control of an electric device, information being input audibly by spelling into the electric device, the electric device outputting a known letter or a known character or a recognized letter sequence or character sequence in order to acknowledge the letter input or character input, **characterized in that** when correspondence is recognized between a sequence of individually input letters or characters and a stored information item or the start of a stored information item the stored information is output as an input suggestion, and **in that** the output suggestion is rejected by voice inputting a further letter or character or a further letter sequence or character sequence.

2. Method according to Claim 1, **characterized in that** the recognized letter or character is output before the next input.

3. Method according to Claim 1 or 2, **characterized in that** the recognized letter or character is output audibly and/or visually.

4. Method according to one of the preceding claims, **characterized in that**, in order to correct a letter or character which has not been recognized correctly or a letter sequence or character sequence which has not been recognized correctly, the letter or character which has been input last or the letter sequence or character sequence which has been input last can be audibly input again.

5. Method according to one of the preceding claims, **characterized in that** an input suggestion is accepted by voice inputting a confirmation command.

6. Method according to one of the preceding claims,
**characterized in that** the electric device is a navigation system of a motor vehicle.

7. Method according to Claim 6, **characterized in that** the information which is to be input comprises destination inputs, route inputs and/or control commands.

8. Method according to one of Claims 6 or 7,
**characterized in that** destination inputs and route inputs are input in individual letters and control commands as a character sequence with at least two characters.

9. Method according to Claim 8, **characterized in that** when inputting characters for control commands the characters which are input are the initial letters of a word.

## Revendications

1. Procédé de commande vocale d'un appareil électrique, selon lequel on entre des informations acoustiquement dans l'appareil électrique par épellation, et l'appareil électrique émet une lettre reconnue ou un caractère reconnu ou une suite de lettres ou de caractères reconnue pour confirmer l'entrée des lettres ou des caractères,
**caractérisé en ce que**
lors d'une détection d'une concordance d'une suite de lettres ou de caractères entrés individuellement avec une information enregistrée ou le début d'une information enregistrée, l'information enregistrée est émise comme proposition d'entrée, et
la proposition d'entrée est rejetée par l'entrée vocale d'une autre lettre, d'un autre caractère ou d'une autre suite de lettres ou de caractères.

2. Procédé selon la revendication 1,
**caractérisé en ce que**
l'émission de la lettre ou du caractère reconnu s'effectue avant l'entrée suivante.

3. Procédé selon la revendication 1 ou 2,
**caractérisé en ce que**
l'émission de la lettre ou du caractère reconnu s'effectue par voie acoustique et/ ou optique.

4. Procédé selon l'une quelconque des revendications précédentes,
**caractérisé en ce que**
pour corriger une lettre ou un caractère reconnu comme non correct ou une suite de lettres ou de caractères reconnue comme non correcte, la dernière lettre entrée ou le dernier caractère entré ou la dernière suite de lettres ou de caractères entrée peut être entré(e) à nouveau acoustiquement.

5. Procédé selon l'une quelconque des revendications précédentes,
**caractérisé en ce qu'**
une proposition d'entrée est acceptée par une entrée vocale d'une instruction de confirmation.

6. Procédé selon l'une quelconque des revendications précédentes,
**caractérisé en ce que**
l'appareil électrique est un système de navigation d'un véhicule automobile.

7. Procédé selon la revendication 6,
**caractérisé en ce que**
les informations à entrer présentent des entrées d'une destination ou d'un trajet et/ou des instructions de commande.

8. Procédé selon l'une quelconque des revendications 6 ou 7,
**caractérisé en ce qu'**
on entre entrées d'une destination ou d'un trajet sous forme de lettres individuelles, et les instructions de commande sous forme d'une suite de caractères comprenant au moins deux caractères.

9. Procédé selon la revendication 8,
**caractérisé en ce que**
lors de l'entrée de caractères d'instruction de commande, les caractères entrés sont les premières lettres d'un mot.
